# EUROPÄISCHE PATENTSCHRIFT

(11) **EP 0 536 166 B1**
(45) Veröffentlichungstag und Bekanntmachung des Hinweises auf die Patenterteilung: **05.04.1995**
(21) Anmeldenummer: 91910291.3
(22) Anmeldetag: 31.05.1991
(51) Int. Cl.: C09D 5/44, C08G 18/80

(54) **VERFAHREN ZUM BESCHICHTEN ELEKTRISCH LEITFÄHIGER SUBSTRATE, WÄSSRIGE LACKE UND BLOCKIERTE NCO-GRUPPEN ENTHALTENDE VERNETZUNGSMITTEL**
Process for coating electrically conductive substrates, aqueous paints and cross-linking agents containing blocked NCO group
PROCEDE DE REVETEMENT DE SUBSTRATS ELECTRO-CONDUCTEURS, LAQUE AQUEUSE ET RETICULANT CONTENANT DES GROUPES NCO BLOQUES

(30) Priorität: 23.06.1990 DE 4020115
(43) Veröffentlichungstag der Anmeldung: 14.04.1993
(73) Patentinhaber: BASF Lacke + Farben AG, 48165 Münster-Hiltrup (DE)
(72) Erfinder: OTT, Günther, D-4400 Münster (DE); REITER, Udo, D-4404 Telgte (DE); JOUCK, Walter, D-4400 Münster (DE)
(74) Vertreter: Münch, Volker, Dr.
(86) Internationale Anmeldenummer: EP9101012
(87) Internationale Veröffentlichungsnummer: WO9200358

(56) Entgegenhaltungen:
- EP-A- 031 207
- EP-A- 199 663
- DE-A- 3 311 516

## Beschreibung

Die Erfindung betrifft ein Verfahren zum Beschichten elektrisch leitfähiger Substrate, bei dem
(1) das elektrisch leitfähige Substrat in einen wäßrigen Elektrotauchlack getaucht wird
(2) das Substrat als Kathode geschaltet wird
(3) durch Gleichstrom ein Film auf dem Substrat abgeschieden wird
(4) das beschichtete Substrat aus dem Elektrotauchlack entfernt wird und
(5) der abgeschiedene Lackfilm eingebrannt wird.

Die Erfindung betrifft auch wäßrige Lacke und blockierte NCO-Gruppen enthaltende Vernetzungsmittel.

Das oben beschriebene kathodische Elektrotauchlackierverfahren ist bekannt (vgl. z.B. DE-OS-35 18 732, DE-OS-35 18 770, EP-A-4090, EP-A-12 463 und EP-A-262 069) und wird insbesondere zur Grundierung von Fahrzeug-, insbesondere Automobilkarosserien eingesetzt.

Mit Hilfe des kathodischen Elektrotauchlackierverfahrens können - insbesondere bei Verwendung von Elektrotauchlacken, die kationische, aminmodifizierte Epoxidharze als Bindemittel enthalten - qualitativ hervorragende Lackierungen erhalten werden.

Die zur Durchführung des kathodischen Elektrotauchlackierverfahrens eingesetzten Elektrotauchlacke enthalten vorzugsweise blockierte Polyisocyanate als Vernetzungsmittel. Es ist bekannt, daß bei Verwendung von blockiertem Diphenylmethan-4,4'-diisocyanat (MDI) als Vernetzungsmittel die bei der Verwendung anderer aromatischer Polyisocyanate beobachtete störende Verfärbung ("yellowing") von Decklackschichten nicht auftritt. MDI kann aber nicht ohne weiteres eingesetzt werden, weil es eine starke Kristallisationsneigung zeigt und dadurch zur Destabilisierung der Elektrotauchlacke führt. In der EP-A-236 050 wird beschrieben, daß mit MDI, das mindestens 5 Gew.-% 2,4'-Isomer enthält, stabile Elektrotauchlacke erhältlich sein sollen. Im Handel erhältliche MDI-Typen, die dieser Bedingung entsprechen, weisen jedoch in der Regel nachteiligerweise einen hohen Gehalt an hydrolysierbarem Chlor auf, was zu Elektrotauchlacken mit hohen Chloridionengehalten, d. h. zu Elektrotauchlacken mit erhöhter Korrosivität führt. In der EP-A-293 088 wird beschrieben, daß mit MDI, das ein Uretonimin enthält, stabile Elektrotauchlacke erhältlich sein sollen. Dieser Vorschlag zur Lösung des Kristallisationsproblems führt aber nachteiligerweise nicht in allen Fällen zum Erfolg.

Die der vorliegenden Erfindung zugrundeliegende Aufgabenstellung liegt in der Bereitstellung von Vernetzungsmitteln auf Basis von MDI für wäßrige Elektrotauchlacke, bei deren Verwendung lagerstabile Elektrotauchlacke erhalten werden.

Diese Aufgabe wird überraschenderweise durch die Bereitstellung von blockierten Polyisocyanaten gelöst, die erhältlich sind, indem
a) ein Diol und/oder ein Triol oder eine Mischung aus Diolen und/oder eine Mischung aus Triolen
b) 4,4' Diphenylmethandiisocyanat, dessen Schmelzpunkt durch partielle Umsetzung mit einem Mono- und/oder Polyol oder einer Mischung aus Monoolen und/oder einer Mischung aus Polyolen so weit herabgesetzt worden ist, daß es bei Raumtemperatur flüssig ist und
c) ein Blockierungsmittel oder ein Gemisch aus Blockierungsmitteln
zu einem isocyanatgruppenfreien Vernetzungsmittel umgesetzt werden.

Als Komponente (a) kann im Prinzip jede organische Verbindung eingesetzt werden, die im statistischen Mittel mindestens zwei Hydroxylgruppen pro Molekül enthält. Es können auch Mischungen aus solchen organischen Verbindungen eingesetzt werden. Als Beispiele für einsetzbare Polyole werden lineare, gegebenenfalls verzweigte aliphatische Diole mit 2 bis 12 C-Atomen im Molekül, Poly(ethylenoxid), Poly-(propylenoxid), Poly(ethylenoxid)(propylenoxid) mit zahlenmittleren Molekulargewichten von 100 bis 1000, vorzugsweise 200 bis 400 und lineare, gegebenenfalls verzweigte aliphatische Triole mit 2 bis 12 C-Atomen im Molekül genannt. Geeignete Polyole sind zum Beispiel Ethylenglykol, Propylenglykole, Butandiole, Neopentylglykol, Hexandiole, Dimethylolcyclohexan, Glycerin, Trimethylolethan, Trimethylolpropan, Trimethylolhexan, Pentaerythrit, Dipentaerythrit, Pentaerythritmono- und diallylether und Trimethylolpropanallyether. Als Komponente (a) wird bevorzugt Trimethylolpropan eingesetzt.

Als Komponente (b) wird 4,4' Diphenylmethandiisocyanat, dessen Schmelzpunkt durch partielle Umsetzung mit einem Mono- und/oder Polyol oder einer Mischung aus Monoolen und/oder einer Mischung aus Polyolen so weit herabgesetzt worden ist, daß es bei Raumtemperatur flüssig ist, eingesetzt.

Die Herstellung von 4,4' Diphenylmethandiisocyanat, dessen Schmelzpunkt durch partielle Umsetzung mit einem Mono- und/oder Polyol oder einer Mischung aus Monoolen und/oder einer Mischung aus Polyolen so weit herabgesetzt worden ist, daß es bei Raumtemperatur flüssig ist, ist bekannt und wird beispielsweise in den Patentdokumenten DE-OS-16 18 380, DE-OS-26 24 526; DE-OS-32 41 450, DE-OS-38 31 681, DE-OS-38 18 769, DE-OS-29 13 126, DE-OS-23 47 207, DE-OS-24 04 166, DE-OS-25 13 793, DE-OS-25 13 796, DE-OS-26 22 104, GB-A-1 479 096, GB-A-1 528 045, EP-A-13 487, GB-A-2 034 708, EP-A-10 850, GB-A-2 066 813, EP-A-31 650 und EP-A-31 207 beschrieben. Die Komponente (b) ist auch im Handel erhältlich und wird beispielsweise von den Firmen Bayer AG, BASF AG, Dow Chemicals und ICI PLC angeboten.

Als Komponente (b) wird vorzugsweise 4,4' Diphenylmethandiisocyanat eingesetzt, das durch partielle Umsetzung mit Polyolen oder einem Gemisch aus Polyolen so modifiziert worden ist, daß es bei Raumtemperatur flüssig ist. Geeignete Polyole zur Modifizierung des 4,4' Diphenylmethandiisocyanats sind z. B. lineare oder verzweigte aliphatische Diole mit einem Molekulargewicht von 62 - 700, wie z. B. Verbindungen der Formel R (OH)₂, in welcher R für einen aliphatischen Kohlenwasserstoffrest mit 2 bis 6 Kohlenstoffatomen steht wie z. B. Neopentylglykol, Ethylenglykol, Propylen-1,2-Diol, Propylen-1,3-Diol, Butylen-1,2-Diol, Butylen-1,3-glykol, 1,4 Butan-Diol oder Hexamethylenglykol. Weitere geeignete Polyole sind Polyalkylenglykole wie z. B. Diethylenglykol, Triethylenglykol, Tetraethylenglykol, Dipropylenglykol, Tripropylenglykol oder Polyoxyethylenpolyole bzw. Polyoxypropylenpolyole oder Polyoxypropylen-polyoxyethylen-polyole mit einem zahlenmittleren Molekulargewicht von bis zu 1000. Oft ist es zweckmäßig, Gemische aus den genannten Polyolen zur Modifizierung einzusetzen.
Bevorzugte Polyole sind Polyoxypropylenpolyole mit einem zahlenmittleren Molekulargewicht von 134 - 700 bzw. deren Gemische sowie Tripropylenglykol und Tetrapropylenglykol bzw. deren Gemische.

Die zur Herabsetzung des Schmelzpunktes eingesetzten Monoole oder Polyole, vorzugsweise die oben genannten Polyole sollten in einer solchen Menge mit dem 4,4' Diphenylmethandiisocyanat umgesetzt werden, daß 0,1 bis 50, vorzugsweise 1 bis 30, besonders bevorzugt 10 bis 30 Prozent der NCO-Gruppen durch Reaktion mit den Hydroxylgruppen der Monoole oder Polyole in Urethangruppen überführt werden.

Die Modifizierung des 4,4' Diphenylmethandiisocyanats bzw. des 4,4' Diphenylmethandiisocyanat-haltigen Isocyanatgemisches wird vorzugsweise so durchgeführt, daß das zu modifizierende 4,4' Diphenylmethandiisocyanat bzw. das zu modifizierende 4,4' Diphenylmethandiisocyanat-haltige Polyisocyanatgemisch vorgelegt wird und das als Modifzierungsmittel dienende Monool oder Polyol bzw. Gemisch aus Monoolen und/oder Polyolen unter Rühren zugegeben wird. Vorzugsweise wird in Gegenwart einer Inertgas-Atmosphäre gearbeitet. Die Modifizierungsreaktion wird im allgemeinen zwischen 20 und 140°C, vorzugsweise zwischen 40 und 80°C durchgeführt. Die Modifzierungsreaktion kann auch kontinuierlich durch Zudosierung der Monool- bzw. Polyolkomponente zu einem Polyisocyanat-Strom durchgeführt werden.

Als Komponente (c) können im Prinzip alle für Polyisocyanate geeignete Blockierungsmittel, beispielsweise lineare, gegebenenfalls verzweigte aliphatische Monoalkohole mit 1 bis 12 C-Atomen im Molekül oder Mischungen aus solchen Monoalkoholen eingesetzt werden. Als Beispiele für derartige Monoalkohole werden genannt: Methanol, Ethanol, Propanol, Trimethylolpropandiallylether, Butanol, Pentanol, Pentaerythrittriallylether, Hexanol, Heptanol, Isodecanol und 2-Ethylhexanol. Es können auch Glykolether der allgemeinen Formel CH₃(CH₂)ₙ-0-(CH₂-CH₂-0-)ₘH oder Mischungen aus derartigen Glykolethern als Komponente (c) eingesetzt werden. In der allgemeinen Formel steht n für eine ganze Zahl von 0 bis 5, vorzugsweise 2 bis 5 und m für eine ganze Zahl von 1 bis 3, vorzugsweise 1 oder 2. Als Beispiele für einsetzbare Glykolether werden Propylglykol, Propyldiglykol, Butylglykol und Butyldiglykol genannt. Als Komponente (c) können auch Propylenglykolether der allgemeinen Formel CH₃(CH₂)ₙ-0-(CH₂-CHCH₃-0-)ₘH oder Mischungen aus derartigen Propylenglykolethern eingesetzt werden (n steht für eine ganze Zahl von 0 bis 5 und m steht für eine ganze Zahl von 1 bis 3).

Als Komponente (c) werden vorzugsweise Glykolether oder Mischungen aus Glykolethern der oben beschriebenen allgemeinen Formel CH₃(CH₂)ₙ-0-(CH₂-CH₂-0-)ₘH eingesetzt.

Die Umsetzung der Komponenten (a), (b) und (c) kann zweckmäßigerweise bei Temperaturen von 20 bis 80°C durchgeführt werden. Die Umsetzung kann mit Katalysatoren, wie z.B. Dibutylzinndilaurat katalysiert werden.

Die erfindungsgemäßen Vernetzungsmittel können im Prinzip in allen Lacken eingesetzt werden, die ein Bindemittel mit gegenüber NCO-Gruppen reaktiven Gruppen (z.B. Hydroxylgruppen und/oder primäre Aminogruppen und/oder sekundäre Aminogruppen und/oder Thiolgruppen) enthalten. Die erfindungsgemäßen Vernetzungsmittel werden vorzugsweise in anodisch und kathodisch abscheidbaren Elektrotauchlacken eingesetzt.

Anodisch abscheidbare Elektrotauchlacke werden beispielsweise in den US-Patenten US-PS-3,366,563, US-PS-3,369,983, US-PS-3,403,088, US-PS-3,530,054, US-PS 3,565,781 und US-PS-3,772,227 beschrieben. Besonders bevorzugt werden die erfindungsgemäßen Vernetzungsmittel in kathodisch abscheidbaren Elektrotauchlacken eingesetzt, die als Bindemittel kationische, aminmodifizierte Epoxidharze enthalten. Derartige Elektrotauchlacke sind bekannt und werden beispielsweise in der DE-OS-35 18 770, DE-OS-35 18 732, EP-B-102 501, DE-OS-27 01 002, US-PS-4,104,147, EP-A-4090, EP-A-12 463, US-PS-4,031,050, US-PS 3,922,253, US-PS-4,101,486, US-PS-4,038,232 und US-PS-4,017,438 beschrieben. In diesen Patentdokumenten wird auch die Herstellung der in Rede stehenden kationischen, aminmodifizierten Epoxidharze ausführlich beschrieben.

Unter kationischen, aminmodifizierten Epoxidharzen werden kationische Reaktionsprodukte aus
(α) ggf. modifizierten Polyepoxiden und
(β) Aminen
verstanden. Diese kationischen, aminmodifizierten Epoxidharze können durch Umsetzung der Komponenten (α) und (β) und - falls notwendig - anschließender Protonierung hergestellt werden. Es ist aber auch möglich, ein unmodifiziertes Polyepoxid mit einem Amin umzusetzen und an dem so erhaltenen aminmodifizierten Epoxidharz weitere Modifizierungen durchzuführen.

Unter Polyepoxiden werden Verbindungen verstanden, die zwei oder mehr Epoxidgruppen im Molekül enthalten.

Besonders bevorzugte (α)-Komponenten sind Verbindungen, die herstellbar sind durch Umsetzung von
(i) einer Diepoxidverbindung oder eines Gemisches von Diepoxidverbindungen mit einem Epoxidäquivalentgewicht unter 2000 mit
(ii) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,
wobei die Komponenten (i) und (ii) in einem Molverhältnis von 10 : 1 bis 1 : 1, bevorzugt 4 : 1 bis 1,5 : 1, eingesetzt werden und die Umsetzung der Komponente (i) mit der Komponente (ii) bei 100 bis 190°C, gegebenenfalls in Anwesenheit eines Katalysators durchgeführt wird (vgl. DE-OS-35 18 770).

Weitere besonders bevorzugte (α)-Komponenten sind Verbindungen, die herstellbar sind durch eine bei 100 bis 195°C, gegebenenfalls in Anwesenheit eines Katalysators durchgeführte, durch einen monofunktionell reagierenden Starter, der entweder eine alkoholische OH-Gruppe, eine phenolische OH-Gruppe oder eine SH-Gruppe trägt, initiierte Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-OS 35 18 732).

Polyepoxide, die zur Herstellung der besonders bevorzugten (α)-Komponenten und auch selbst als (α)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4'-Dihydroxybenzophenon, Bis-(4-hydroxyphenyl)-1,1-ethan, Bis-(4-hydroxyphenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2propan. Es können auch Polyglycidylester von Polycarbonsäuren, wie z.B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:
- Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsauren (z.B. Milchsäure, Dimethylolpropionsäure) sowie carboxylgruppenhaltige Polyester oder
- aminogruppenhaltige Verbindungen, wie Diethylamin oder Ethylhexylamin oder Diamine mit sekundären Aminogruppen, z.B. N,N'-Dialkylalkylendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
- hydroxylgruppennaltige Verbindungen, wie Neopentylglykol, Bisethoxiliertes Neopentylglykol, Hydroxipivalinsäureneopentylglykolester, DimethylhydantoinN,N'-diethanol, Hexandiol-1,6, Hexandiol-2,5, 1,4-Bis-(hydroximethyl)cyclohexan, 1,1-Isopropyliden-bis-(p-phenoxi)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methylisobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
- gesättigte oder ungesättigte Fettsäuremethylester, die in Gegenwart von Natriummethylat mit Hydroxylgruppen der Epoxidharze umgeestert werden.

Als Komponente (β) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z.B. Methylethanolamin, Diethanolamin u. dgl. Ferner sind Dialkylaminoalkylamine, wie z.B. Dimethylaminoethylamin, Diethylaminopropylamin, Dimethylaminopropylamin u. dgl. geeignet. Es können auch ketimingruppenhaltige Amine, wie z.B. das Methylisobutyldiketimin von Diethylentriamin eingesetzt werden. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden sekundäre Amine als (β)-Komponenten eingesetzt.

Die für die Wasserverdünnbarkeit und elektrische Abscheidung erforderlichen Ladungen können durch Protonierung mit wasserlöslichen Säuren (z.B. Borsäure, Ameisensäure, Milchsäure, bevorzugt Essigsäure) erzeugt werden. Eine weitere Möglichkeit zur Einführung kationischer Gruppen in die Komponente (α) besteht in der Umsetzung von Epoxidgruppen der Komponente (α) mit Aminsalzen.

Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise durch chemische Modifikation der kationischen aminmodifizierten Epoxidharze erhalten werden. Ein selbstvernetzendes System kann z.B. dadurch erhalten werden, daß das kationische aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird. Als teilblockiertes Polyisocyanat kann auch eine im statistischen Mittel noch eine freie NCO-Gruppe im Molekül aufweisende Vorstufe der erfindungsgemäßen Vernetzungsmittel eingesetzt werden.

Die erfindungsgemäßen Vernetzungsmittel werden in der Regel in einer Menge von 5 bis 60 Gew.-%, vorzugsweise 20 bis 40 Gew.-%, bezogen auf die im Elektrotauchlack enthaltene Menge an kationischem aminmodifiziertem Epoxidharz, eingesetzt.

Neben dem erfindungsgemäßen Vernetzungsmittel und dem kationischen, aminmodifizierten Epoxidharz (es kann selbstverständlich auch eine Mischung unterschiedlicher kationischer, aminmodifizierter Epoxidharze eingesetzt werden) können die in Rede stehenden Elektrotauchlacke noch weitere Bestandteile, wie z.B. Pigmente, Weichmacher, Füllstoffe, Netzmittel, organische Lösemittel, Antioxidantien usw. enthalten.

Der Festkörper der Elektrotauchlacke beträgt vorzugsweise 7 bis 35 Gew.-Teile, besonders bevorzugt 12 bis 25 Gew.-Teile. Der pH-Wert der Elektrotauchlacke liegt zwischen 6 und 8, vorzugsweise zwischen 6,5 und 7,5.

Der Elektrotauchlack wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m². Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise 150 bis 180°C über eine Zeitdauer von 15 bis 30 Minuten, eingebrannt.

Als elektrisch leitfähige Substrate können beliebige elektrisch leitfähige Substrate, insbesondere aber Metalle, wie Stahl, Aluminium, Kupfer und dergleichen eingesetzt werden.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung eines erfindungsgemäßen Vernetzungsmittels

In einem Reaktionsgefäß mit Rührer, Rückflußkühler und Inertgaseinleitungsrohr werden 2500 g (10 mol) 4,4'-Diphenylmethandiisocyanat aufgeschmolzen und bei 50°C unter Rühren mit 2400 g Pluriol P 600 (Polypropylenglykol, Molgewicht 600, Hersteller BASF AG) vermischt. Man erwärmt nun langsam auf 70°C und hält noch 30 Minuten bei dieser Temperatur. Das NCO-Äquivalentgewicht liegt dann bei 402 g/Äquivalent. Man verdünnt nun mit 2778 g Methylisobutylketon, gibt 4 g Dibutylzinndilaurat zu, und läßt innerhalb von 90 Minuten 1458 g (9 mol) Diethylenglykolmonobutylether so zulaufen, daß die Innentemperatur bei äußerem Gegenkühlen 70°C nicht übersteigt. Anschließend werden 134 g (1 mol) geschmolzenes Trimethylolpropan zugegeben. Man läßt den Ansatz exotherm reagieren, heizt anschließend auf 110°C und hält noch 90 Minuten bei dieser Temperatur. Danach sind keine Isocyanatgruppen mehr nachweisbar. Nach dem Abkühlen erhält man eine hellgelbe Vernetzerlösung mit einem Festgehalt von 71,2 % (1 Stunde bei 130°C bestimmt), die bei Raumtemperaturlagerung keine Kristallisation zeigt.

### 2. Herstellung eines kationischen, aminmodifizierten Epoxidharzes

In einem Reaktor werden unter Stickstoffatmosphäre 43,73 Teile eines Epoxidharzes auf Basis Bisphenol A mit einem EEW (Epoxidäquivalentgewicht) von 188, 8,84 Teile Bisphenol A, 10,16 Teile Dodecylphenol und 3,08 Teile Xylol vorgelegt und auf 130°C aufgeheizt. Dann gibt man 0,06 Teile Triphenylphosphin zu, worauf die Temperatur kurzzeitig auf 160°C steigt. Nachdem die Temperatur wieder auf 130°C gefallen ist, gibt man 0,16 Teile N,N-Dimethylaminobenzylamin zu und hält für ca. 2 weitere Stunden bei 130°C, bis das EEW auf 810 gestiegen ist. Unter Kühlung werden nun 3,50 Teile Butylglykol, 5,30 Teile Diethanolamin und 8,13 Teile Xylol zugegeben. Nachdem die Temperatur auf 90°C gefallen ist, wird die Reaktionsmischung noch 1 Stunde bei 90°C gehalten. Sodann kühlt man weiter und gibt 3,50 Teile Propylenglykolphenylether und 11,57 Teile Isobutanol zu. Bei 60°C werden 1,98 Teile N,N-Dimethylaminopropylamin zugegeben. Man hält anschließend noch 2 Stunden bei 60°C, heizt auf 90°C auf und hält noch 1 weitere Stunde bei dieser Temperatur bis die Viskosität der Mischung konstant bleibt und trägt nach kurzer Kühlung aus. Die hellgelbe Losung hat einen Festkörper von 70,2 % (1 Std. bei 130°C) und eine Viskosität von 2,5 dPas (40 %ige Losung in Methoxypropanol, bei 23°C am Platte-Kegel-Gerät gemessen). Der Amingehalt liegt bei 1,26 Milliäquivalenten pro g Festharz.

### 3. Herstellung einer wäßrigen Bindemitteldispersion

Zur Herstellung einer wäßrigen Bindemitteldispersion werden 1040 Teile des Harzes gemäß Pkt. 2, 560 Teile des unter Pkt. 1 beschriebenen Vernetzungsmittels, 41 Teile 88 %ige Milchsäure und 2 Teile einer Entschäumerlösung¹⁾ bei Raumtemperatur gemischt. Zu der nunmehr homogenen Mischung gibt man unter Rühren portionsweise 597 Teile entionisiertes Wasser. Nach 30-minütigem Homogenisieren wird mit weiteren 960 Teilen entionisiertem Wasser portionsweise weiter verdünnt. Man rührt dann noch 30 Minuten nach und entfernt anschließend in einer Vakuumdestillation bei 45°C die flüchtigen Lösemittel und ersetzt sie mengenmäßig durch entionisiertes Wasser. Man erhält eine stabile wäßrige Dispersion mit einem Festkörper von 34,8 % (1 Stunde bei 130°C). Der Chloridgehalt der Dispersion liegt bei 50 ppm.
¹⁾ 50 %ige Lösung von Surfynol (Fa. Air Products) in Butylglykol

### 4. Herstellung einer grauen Pigmentpaste

27,81 Teile Bisphenol-A-diglycidylether, 1,44 Teile Xylol und 5,81 Teile Bisphenol A werden in Gegenwart von 0,002 Teilen Triphenylphosphin bei 150 - 160°C bis zu einem EEW von 345 umgesetzt. Der Ansatz wird dann mit 21,61 Teilen Butylglykol verdünnt und auf 49°C gekühlt. Dann wird eine Mischung aus 7,77 Teilen 9-Amino-3.6-dioxanonan-1-ol und 4,07 Teilen N,N-Dimethylaminopropylamin innerhalb 6 min. zugegeben, worauf die Temperatur auf 110°C steigt. Man hält die Mischung 1 Std. lang zwischen 110 und 115°C bevor 6,45 Teile Butylglykol zugegeben werden und der Ansatz auf 77°C gekühlt wird. Anschließend werden 14,9 Teile Nonylphenolglycidylether zugegeben. Die Temperatur steigt daraufhin auf 90°C an und wird dort 1 Std. gehalten, bevor mit 10,03 Teilen Butylglykol verdünnt und gekühlt wird. Der Feststoffgehalt der dünnflüssigen Harzlösung liegt bei 60 %.

Zur Herstellung der Pigmentpaste werden zunächst 29,33 Teile Wasser, 1,59 Teile Essigsäure (90 %ig) und 21,60 Teile der vorstehend beschriebenen Harzlösung vorgemischt. Nun werden 0,7 Teile Entschäumer (1), 0,5 Teile Ruß, 4,8 Teile basisches Bleipigment, 6,75 Teile Extender HEWP (2), 32,48 Teile Titandioxid (R 900) und 2,25 Teile Dibutylzinnoxid zugegeben, und die Mischung wird 30 min lang unter einem schnellaufenden Dissolverrührwerk vordispergiert. Anschließend wird die Mischung in einer Laborkleinmühle (Motor Mini Mill, Eiger Engineering Ltd. Great Britain) während 1 bis 1,5 Std. bis zu einer Hegmann-Feinheit von kleiner/gleich 12 dispergiert und mit weiterem Wasser auf die gewünschte Verarbeitungsviskosität eingestellt.
Es resultiert eine sehr entmischungsstabile Pigmentpaste.
(1) "Tristar Antifoam",Tristar Chemical Co., Dallas, USA
(2) English China Clay Int. Great Britain

### 5. Zubereitung eines wäßrigen Elektrotauchlackes, Abscheidung und Prüfung des erhaltenen Lackfilmes

Es werden 1925 Teile der wäßrigen Bindemitteldispersion mit 2500 Teilen entionisiertem Wasser und 2 Teilen 30-%iger Milchsäure verdünnt. In die so verdünnte Bindemitteldispersion werden dann 573 Teile der unter Punkt 4 beschriebenen Pigmentpaste eingerührt. Der Festkörper des Bades liegt bei 20 %.

Man läßt den Elektrotauchlack 3 Tage bei Raumtemperatur unter Rühren altern. Die Abscheidung der Lackfilme erfolgt während 2 Min. bei 220 Volt auf kathodisch geschalteten zinkphosphatierten Stahlprüftafeln. Die Badtemperatur wird hierbei auf 25°C gehalten. Der abgeschiedene Naßfilm wird mit entionisiertem Wasser nachgespült und während 20 Min. bei 165°C eingebrannt.

Man erhält einen harten Lackfilm mit einer Schichtdicke von 22 »m und einem sehr guten Verlauf sowie mit einer sehr guten Beständigkeit gegenüber Lösemitteln (geprüft durch 20-maliges Hin- und Herreiben mit einem acetongetränkten Wattebausch).
Eine weitere beschichtete Tafel wird mit einem weißen Automobil-Decklack in einer Schichtstärke von etwa 50 »m überlackiert und einem Vergilbunstest unterzogen. Der eingebrannte weiße Decklack weist keine Vergilbungsspuren auf.

## Patentansprüche

1. Verfahren zum Beschichten elektrisch leitfähiger Substrate, bei dem
(1) das elektrisch leitfähige Substrat in einen wäßrigen Elektrotauchlack getaucht wird
(2) das Substrat als Kathode geschaltet wird
(3) durch Gleichstrom ein Film auf dem Substrat abgeschieden wird
(4) das beschichtete Substrat aus dem Elektrotauchlack entfernt wird und
(5) der abgeschiedene Lackfilm eingebrannt wird,
dadurch gekennzeichnet, daß der wäßrige Elektrotauchlack ein Vernetzungsmittel enthält, das erhältlich ist, indem
a) ein Diol und/oder ein Triol oder eine Mischung aus Diolen und/oder eine Mischung aus Triolen
b) 4,4' Diphenylmethandiisocyanat, dessen Schmelzpunkt durch partielle Umsetzung mit einem Mono- und/oder Polyol oder einer Mischung aus Monoolen und/oder einer Mischung aus Polyolen so weit herabgesetzt worden ist, daß es bei Raumtemperatur flüssig ist und
c) ein Blockierungsmittel oder ein Gemisch aus Blockierungsmitteln
zu einem isocyanatgruppenfreien Vernetzungsmittel umgesetzt werden.

2. Wäßrige Lacke, enthaltend ein Vernetzungsmittel, das erhältlich ist, indem
a) ein Diol und/oder ein Triol oder eine Mischung aus Diolen und/oder eine Mischung aus Triolen
b) 4,4' Diphenylmethandiisocyanat, dessen Schmelzpunkt durch partielle Umsetzung mit einem Mono- und/oder Polyol oder einer Mischung aus Monoolen und/oder einer Mischung aus Polyolen so weit herabgesetzt worden ist, daß es bei Raumtemperatur flüssig ist und
c) ein Blockierungsmittel oder ein Gemisch aus Blockierungsmitteln
zu einem isocyanatgruppenfreien Vernetzungsmittel umgesetzt werden.

3. Blockierte NCO-Gruppen enthaltende Vernetzungsmittel, dadurch gekennzeichnet, daß sie erhältlich sind, indem
a) ein Diol und/oder ein Triol oder eine Mischung aus Diolen und/oder eine Mischung aus Triolen
b) 4,4' Diphenylmethandiisocyanat, dessen Schmelzpunkt durch partielle Umsetzung mit einem Mono- und/oder Polyol oder einer Mischung aus Monoolen und/oder einer Mischung aus Polyolen so weit herabgesetzt worden ist, daß es bei Raumtemperatur flüssig ist und
c) ein Blockierungsmittel oder ein Gemisch aus Blockierungsmitteln
zu einem isocyanatgruppenfreien Vernetzungsmittel umgesetzt werden.

4. Verfahren, Lacke oder Vernetzungsmittel nach einem der Ansprüche 1 bis 3, dadurch gekennzeichnet, daß als Komponente (c) Glykolether der allgmeinen Formel CH₃(CH₂)ₙ-0-(CH₂-CH₂-0-)ₘH oder Mischungen aus derartigen Glykolethern eingesetzt werden, wobei n für eine ganze Zahl von 0 bis 5, vorzugsweise 2 bis 5 und m für eine ganze Zahl von 1 bis 3, vorzugsweise 1 oder 2 steht.

## Claims

1. Process for coating electrically conductive substrates, in which
(1) the electrically conductive substrate is dipped into -0a water-based electro-dipping primer
(2) the substrate is connected as the cathode
(3) a film is deposited on the substrate by means of direct current
(4) the coated substrate is removed from the electro-dipping primer and
(5) the deposited film coating is baked,
characterized in that the water-based electro-dipping primer contains a crosslinking agent obtainable by reacting
a) a diol and/or a triol or a mixture of diols and/or a mixture of triols,
b) diphenylmethane 4,4'-diisocyanate the melting point of which has been depressed, by partial reaction with a monool and/or polyol or a mixture of monools and/or a mixture of polyols, so far that it is liquid at room temperature and
c) a masking agent or a mixture of masking agents
to give a crosslinking agent which is free from isocyanate groups.

2. Water-based coatings containing a crosslinking agent obtainable by reacting
a) a diol and/or a triol or a mixture of diols and/or a mixture of triols,
b) diphenylmethane 4,4'-diisocyanate the melting point of which has been depressed, by partial reaction with a monool and/or polyol or a mixture of monools and/or a mixture of polyols, so far that it is liquid at room temperature and
c) a masking agent or a mixture of masking agents
to give a crosslinking agent which is free from isocyanate groups.

3. Crosslinking agents containing masked NCO groups, characterized in that they are obtainable by reacting
a) a diol and/or a triol or a mixture of diols and/or a mixture of triols,
b) diphenylmethane 4,4'-diisocyanate the melting point of which has been depressed, by partial reaction with a monool and/or polyol or a mixture of monools and/or a mixture of polyols, so far that it is liquid at room temperature and
c) a masking agent or a mixture of masking agents
to give a crosslinking agent which is free from isocyanate groups.

4. Process, coatings or crosslinking agents according to one of claims 1 to 3, characterized in that glycol ethers of the general formula CH₃(CH₂)ₙ-O-(CH₂-CH₂-O-)ₘH or mixtures of glycol ethers of this type are employed as the component (c), n being an integer from 0 to 5, preferably 2 to 5, and m being an integer from 1 to 3, preferably 1 or 2.

## Revendications

1. Procédé de revêtement de substrats électroconducteurs, lors duquel
(1) on immerge le substrat électroconducteur dans un vernis aqueux pour trempage électrophorétique,
(2) on branche le substrat en tant que cathode,
(3) on procède au dépôt d'un film sur le substrat à l'aide d'un courant continu,
(4) on retire le substrat revêtu hors du vernis pour trempage électrophorétique et
(5) on soumet le film de vernis déposé à une cuisson,
caractérisé en ce que le vernis aqueux pour trempage électrophorétique contient un agent de réticulation, que l'on peut obtenir en ce que l'on fait réagir
a) un diol et/ou un triol ou un mélange de diols et/ou un mélange de triols
b) du diisocyanate de 4,4'-diphénylméthane, dont le point de fusion a été diminué par une réaction partielle avec un monoalcool et/ou un polyol ou avec un mélange de monoalcools et/ou un mélange de polyols à un point tel qu'il soit liquide à température ambiante et
c) un agent de blocage ou un mélange d'agents de blocage
pour former un agent de réticulation exempt de groupements isocyanates.

2. Vernis aqueux, contenant un agent de réticulation, que l'on peut obtenir en ce que l'on fait réagir
a) un diol et/ou un triol ou un mélange de diols et/ou un mélange de triols
b) du diisocyanate de 4,4'-diphénylméthane, dont le point de fusion a été diminué par une réaction partielle avec un monoalcool et/ou un polyol ou avec un mélange de monoalcools et/ou un mélange de polyols à un point tel qu'il soit liquide à température ambiante et
c) un agent de blocage ou un mélange d'agents de blocage
pour former un agent de réticulation exempt de groupements isocyanates.

3. Agents de réticulation contenant des groupements NCO bloqués, caractérisé en ce que l'on peut les obtenir en ce que l'on fait réagir
a) un diol et/ou un triol ou un mélange de diols et/ou un mélange de triols
b) du diisocyanate de 4,4'-diphénylméthane, dont le point de fusion a été diminué par une réaction partielle avec un monoalcool et/ou un polyol ou avec un mélange de monoalcools et/ou un mélange de polyols à un point tel qu'il soit liquide à température ambiante et
c) un agent de blocage ou un mélange d'agents de blocage
pour former un agent de réticulation exempt de groupements isocyanates.

4. Procédé, vernis ou agent de réticulation selon l'une quelconque des revendications 1 à 3, caractérisé en ce que l'on utilise en tant que composant (c) des éthers glycoliques de formule générale CH₃(CH₂)ₙ-O-(CH₂-CH₂-O-)ₘH ou des mélanges de tels éthers glycoliques, n représentant un nombre entier allant de 0 à 5, de préférence de 2 à 5 et m représentant un nombre entier allant de 1 à 3, de préférence 1 ou 2.
